Europäisches Patentamt

European Patent Office

Office européen des brevets

(19)

(11) Veröffentlichungsnummer: **0 044 108**

**A1**

(12) **EUROPÄISCHE PATENTANMELDUNG**

(21) Anmeldenummer: **81200754.0**

(22) Anmeldetag: **02.07.81**

(51) Int. Cl.$^3$: **B 29 D 27/02**
**B 05 B 13/04**

(30) Priorität: **04.07.80 NL 8003870**

(43) Veröffentlichungstag der Anmeldung:
**20.01.82 Patentblatt 82/3**

(84) Benannte Vertragsstaaten:
**AT BE CH DE FR GB IT LI LU NL SE**

(71) Anmelder: **MOBAN B.V.**
**Kleine straat 2B**
**NL-6369 PA Simpelveld(NL)**

(72) Erfinder: **Van den Berg, Joannes**
**Dr. Kampsstraat 27**
**NL-6171 JN Stein(NL)**

(72) Erfinder: **Aalbers, Johan Gerhardus**
**Burg. Kerhrerstraat 34**
**NL-7002 LD Doetinchem(NL)**

(74) Vertreter: **Roeffen, Wilhelmus Johannes Maria**
**OCTROOIBUREAU DSM Postbus 9**
**NL-6160 MA Geleen(NL)**

(54) **Verfahren und Vorrichtung zum Auftragen von Schaum auf ein Flachpaneel und nach dem Verfahren hergestelltes Paneel.**

(57) Verfahren zum Auftragen von Schaum auf ein mit gewissen Abständen voneinander angebrachten parallelen Latten (2,2') versehenes Paneel (1) mit Hilfe eines Spritzkopfs (5), der parallel zu und in der Mitte zwischen zwei nebeneinanderliegenden Latten (2,2') über das Paneel (1) fortbewegt wird und während dieser Bewegung eine hin- und hergehende oder pendelnde Bewegung in einer Fläche senkrecht zu den Latten (2,2') ausführt.

FIG.1

Croydon Printing Company Ltd.

1

# VERFAHREN UND VORRICHTUNG ZUM AUFTRAGEN VON SCHAUM AUF EIN FLACHPANEEL UND NACH DEM VERFAHREN HERGESTELLTES PANEEL

Die Erfindung bezieht sich auf ein Verfahren zum Auftragen von Schaum auf ein flaches, nahezu waagerecht angeordnetes und mit in gewissen Abständen voneinander angebrachten parallelen Latten versehenes Paneel mit Hilfe eines in bezug auf das Paneel bewegenden Spritzkopfes, der den Schaum oder ein schaumbildendes Material zwischen den Latten auf dem Paneel anbringt.

Solche Paneele lassen sich als Baupaneel einsetzen, zum Beispiel als Innenhohlblatt, Trennwand, Dachschalung und dergleichen. Der Schaum bildet eine wärmeisolierende Schicht und gibt dem Paneel eine grössere mechanische Festigkeit.

Ein solches Verfahren ist aus der niederländischen Patentanmeldung 7707840 bekannt. Bei dem in ihr bschriebenen Verfahren werden durch einen Spritzkopf Streifen aufschäumendes Material zwischen nebeneinander angeordneten Latten angebracht, parallel zu den Latten, bis der Raum zwischen den Latten gefüllt ist. Der Spritzkopf wird in der Längsrichtung der Latten in der Weise hin- und herbewegt, dass der eine Streifen an den nächstliegenden anschliesst. Beim Anbringen von verhältnismässigen langen Streifen ist der eine Streifen aufgetragenes Schaummaterial bereits grossenteils ausgeschäumt, wenn der nächstliegende Streifen angebracht wird. Der Nachteil davon ist, dass das Schaummaterial von nebeneinander angebrachen Streifen nicht oder in nur geringem Masse ineinanderfliesst, wodurch keine optimale Haftung zwischen den einzelnen nebeneinanderliegenden Streifen erzielt wird. Dadurch können sich zwischen den Schaumstreifen Spalten ergeben, besonders dann, wenn die Latten nicht genau parallel zueinander liegen. Wiewohl es mit diesem Verfahren möglich ist, den Schaum an den Latten ansteigen zu lassen, was mit Rücksicht auf Festigkeit und isolierende Eigenschaften erwünscht ist, kann men die Höhe des Schaums an den Latten nicht einstellen. Ausserdem bekommt man auch keine egale Oberfläche des aufgetragenen Schaums.

Diese Unterschiede in der Dicke der Schaumschicht und die Spalten haben auf die isolierenden Eigenschaften und die mechanische Festigkeit einen nachteiligen Einfluss.

Die Erfindung bezweckt die Schaffung eines Verfahrens zum Auftragen von Schaum oder einem schaumbildenden Material zwischen die Latten eines mit Latten verstärkten Paneels, bei dem sich obige Nachteile nicht einstellen.

Erfindungsgemäss wird dies dadurch erziehlt, dass der Spritzkof parallel zu und in der Mitte zwischen jeweils zwei nebeneinanderliegenden Latten über das Paneel fortbewegt wird und dass während dieser Bewegung der Spritzkopf eine hin- und hergehende Bewegung ausführt in einer Richtung senkrecht zu den Latten.

Als Schaum oder als schaumbildendes Material lässt sich jeder geeignete haftende Kunstharzschaum verwenden. Sehr geeignet ist zum Beispiel Polyurethanschaum.

Mit dem erfindungsgemässen Verfahren erzielt man ein Ineinanderfliesen der nebeneinanderliegenden Streifen aufschäumendes Material. Die Streifen werden jetzt nahezu parallel zu den in geringen Abständen voneinander angeordneten Latten angebracht, wodurch beim Auftragen des einen Streifens neben dem anderen der vorhergehende Streifen nicht oder kaum mit dem Schäumverfahren angefangen hat. Der Abstand zwischen den Latten ist viel geringer als deren Länge. Das zu verschäumende Material fliesst ineinander über, wodurch eine egale Oberfläche nahezu gleicher Dicke erhalten wird. Auch sind dann keine Spalten mehr vorhanden.

Die hin- und hergehende Bewegung des Spritzkopfs in einer Richtung senkrecht zu den Latten ist vorzugsweise eine Pendelbewegung in bezug auf die Normale auf dem Paneel. Unter Pendelbewegung ist eine periodische Schwenkbewegung um eine Achse parallel zu den Latten am Paneel zu verstehen. Der Spritzkopf, d.h. die Richtung des ausströmenden schaumbildenden Materials, macht dabei einen periodisch variierenden Winkel in bezug auf die Normale auf dem Paneel. Der maximale Winkel in bezug auf die Normale wird Ausschlagswinkel α genannt.

Der Schaum oder das schaumbildende Material lässt sich ganz automatisch zwischen den Latten am Paneel anbringen. Dazu wird durch eine Messvorrichtung der Abstand zwischen zwei nebeneinanderliegenden parallelen Latten gemessen, wobei:

a. der Spritzkopf in halbem Abstand zwischen den Latten angebracht wird und anschliessend

b. der Spritzkopf parallel zu den Latten über das Paneel vorwärtsbewegt wird mit einer Geschwindigkeit und/oder Spritzmenge je Zeiteinheit, die

unmittelbar durch den gemessenen Abstand zwischen den zwei latten bestimmt wird.

Wird der Abstand zwischen den Latten kontinuierlich gemessen, wobei die Stelle des Spritzkopfs kontinuierlich berichtigt und dessen Geschwindigkeit oder die Spritzmenge je Zeiteinheit kontinuierlich geregelt werden, ist es möglich, bei nicht ganz parallel liegenden Latten Unregelmässigkeiten in der Schaumfläche ganz zu vermeiden.

Der Spritzkopf macht vorzugsweise eine Pendelbewegung in bezug auf das Paneel, wobei der Ausschlagswinkel α des Spritzkopfs durch den zwischen den zwei Latten gemessenen Abstand unmittelbar bestimmt wird.

Vorzugsweise ist die hin- und hergehende Bewegung des Spritzkopfs ein Sinusoid. Bei dieser Bewegung wird die hingehende an den Stehrändern der Latten einigermassen verzögert in die zurückgehende Bewegung umgekehrt. Die Folge davon ist, dass an diesen Rändern verhältnismässig mehr Schaummaterial durch den Spritzkopf auf das Paneel aufgetragen wird. Diese Mehrmenge steigt an den Rändern hoch, so dass sie, falls erwünscht, ganz mit Schaum bedeckt werden können. Das Mass des Ansteigens des Schaums an den Latten lässt sich durch Ändern der Sinusoidbewegung einstellen.

Während des Anbringens des Schaums am Paneel lässt sich das Paneel nach Wunsch wohl oder nicht fortbewegen. Der Spritzkopf soll bei fortbewegen vom Paneel dieselbe Geschwindigkeit haben müssen. Es wird bevorzugt, das Paneel während des Auftragens des Schaums nicht fortbewegen zu lassen. Der Abstand zwischen zwei nebeneinanderliegenden parallelen Latten wird vorzugsweise während des Fortbewegens des Paneels mit den Latten in einer Richtung senkrecht zu den Latten gemessen. Dann wird die Bewegung des Paneels eingestellt und der Schaum zwischen den zwei Latten angebracht, wonach das Paneel wieder fortbewegt wird und sich der Zyklus wiederholt, bis sämtliche Räume zwischen den Latten mit Schaum gefüllt sind. Der Ausschlagwinkel des Spritzkopfs wird vorzugsweise direkt proportional zu dem gemessenen Abstand zwischen zwei nebeneinanderliegenden Latten eingestellt.

Das erfindungsgemässe Verfahren eignet sich sehr zum Auftragen von Schaum auf Paneele mit wechselnden Lattenabständen.

Der Abstand zwischen den nebeneinanderliegenden Latten wird vorzugsweise mit einer Fotozelle und eine Lichtquelle gemessen, die zur Höhe der Latten beidseitig des Paneels aufgestellt sind, wobei die Verbindungslinie zwischen der Fotozelle und der Lichtquelle parallel zu den Latten verläuft. Der Spritzkopf lässt sich in einfacher, jedoch sehr wirksamer Weise dadurch in der Mitte zwischen zwei nebeneinanderliegenden Latten einstellen, dass er mit der Hälfte von der Geschwindigkeit verlagert wird, mit der das Paneel in bezug auf die Fotozelle fortbewegt wird. Der Spritzkopf ist vorab über der Verbindungslinie zwischen Fotozelle und Lichtquelle angeordnet. Tut man dies nicht, so muss der Spritzkopf, jedenfalls während der Fortbewegung, mit derselben Geschwindigkeit fortbewegt werden wie das Paneel.

Die Erfindung bezieht sich auf auf eine Vorrichtung zum Durchführen des erfindungsgemässen Verfahrens.

Diese erfindungsgemässe Vorrichtung besteht aus:

a. Mitteln zum Fortbewegen des Paneels;

b. Mitteln zum Messen des Abstands zwischen zwei aufeinanderfolgenden Latten;

c. Mitteln um den Spritzkopf mitten zwischen zwei Latten parallel zu ihnen fortbewegen zu lassen und

d. Mitteln, um den Spritzkopf eine hin- und hergehende Bewegung zwischen den Latten ausführen zu lassen, senkrecht zu den Latten.

Zum Fortbewegen des Paneels kann ein periodisch getriebenes Förderband, ein Kettenförderer, eine Rollenbahn oder dergleichen eingesetzt werden. Wie bereits gesagt, lässt sich der Abstand zwischen zwei nebeneinanderliegenden Latten mit einer Fotozelle mit Lichtquelle messen. Auch können dazu Taster und akustische Messgeräte eingesetzt werden.

Der Spritzkopf lässt sich mitten zwischen zwei nebeneinanderliegenden Latten und parallel zu ihnen mit einer an einer Führung entlang bewegenden Kette fortbewegen, an der der Spritzkopf befestigt ist.

Um den Spritzkopf eine hin- und hergehende Bewegung zwischen den latten, senkrecht zu ihnen, machen zu lassen, kann man ebenfalls eine Führung mit Kettenmechanismus verwenden. Macht der Spritzkopf eine pendelnde Bewegung, senkrecht zu den Latten, so kann man eine drehende Scheibe verwenden, an der ein pneumatischer oder ein hydraulischer Zylinder angebracht is, an dem, oder an der Kolbenstange, der Spritzkopf mit einem Hebelmechanismus befestigt ist. Der Ausschlagswinkel des Spritzkopfs wird dadurch bestimmt, dass die Kolbenstange mehr oder weniger ausgezogen wird, was wiederum in Abhängigkeit von dem gemessenen Abstand zwischen zwei nebeneinanderliegenden parallelen Latten bestimmt oder geregelt wird. Die aufzutragende Schaummenge ist selbstverständlich mit von der gewünschten Schichtdicke abhängig, die durch die Höhe der Latten begrenzt wird.

Für das Paneel kann man viele Materialarten verwenden, wie Holz, Gipskarton, harzgebundene Sandplatten, Sperrholzplatten, faserverstärkte Zementplatten usw. Als Fasermaterial kann man Glasfasern, Polymerfasern, Asbestfasern usw. einsetzen. Die Latten können massiv oder hohl sein oder ein U-Profil haben. Die Hohllatten können wohl oder nicht gefüllt sein, z.B. mit Schaum. Für die Latten kommen Holz, Kunststoff, Metall, Glas, faserverstärkte Materialien usw. in Betracht.

Die Erfindung wird anhand einer Zeichnung erläutert werden. In ihr stellen dar:

Figur 1 eine schematische Draufsicht eines mit Latten versehenen und an einem periodisch beweglichen Tisch angeordneten Paneels,

Figur 2 einen Schnitt der Figur 1,

Figur 3 eine schematische Darstellung des Kippmechanismus des Spritzkopfs und

Figur 4 eine schematisch Darstellung mehrerer Positionen des Spritzkopfs

Das Paneel 1 besitzt parallelle, in gewissen Abständen voneinander angeordnete Latten 2, 2' usw. die lose auf dem Paneel liegen oder zum Beispiel durch Nägel an ihm befestigt sein können. Das Paneel 1 steht auf einem Tisch 3, der zum Beispiel durch eine Rollenbahn 4 periodisch fortbewegt wird. Über dem Paneel 1 befindet sich ein Spritzkopf 5, mit dem schaumbildendes Material am Paneel zwischen den Latten angebracht wird. Auf beiden Seiten des Paneels ist zur Höhe der Latten 2,2' eine Fotozelle 6 mit Lichtquelle 7 angeordnet. Der über dem Paneel angebrachte Spritzkopf 5 ist mit Hilfe von Hebeln 11 und 12 am Zylinder 8 befestigt, dessen Kolbenstange 9 fest an einer drehenden Scheibe 10 angebracht ist.

Der Schaum wird wie folgt am Paneel 1 zwischen den Latten angebracht:

Beim Fortbewegen des Tisches 3 wird der Abstand a zwischen zwei aufeinanderfolgenden Latten 2' und 2" durch die Fotozelle 6 und die Lichtquelle 7 gemessen. Die Tischbewegung wird automatisch eingestellt, wenn die nächstliegende Latte durch die Fotozelle mit Lichtquelle wahrgenommen wird. Gleichzeitig mit dem Fortbewegen des Tisches 3 wird der Spritzkopf 5 in derselben Richtung bewegt, so dass auch dieser einen Abstand a zurückgelegt hat. Auch ist es möglich, dies wird sogar bevorzugt, den Spritzkopf, nachdem er den Raum zwischen zwei Latten gefüllt hat und zum nächsten Raum zwischen zwei Latten bewegt werden muss, bis senkrecht über die Fotozelle und die Lichtquelle zu verlagern und dann beim Bewegen des Tisches mit halber Tischgeschwindigkeit fortzubewegen. Dies beinhaltet, dass der Spritzkopf, wenn der Tisch mit Paneel den Abstand a zwischen zwei aufeinanderfolgenden Latten zurückgelegt hat, einen Abstand $\frac{1}{2}$ a zurückgelegt hat und sich so in der Mitte zwischen zwei aufeinanderfolgenden Latten befindet.

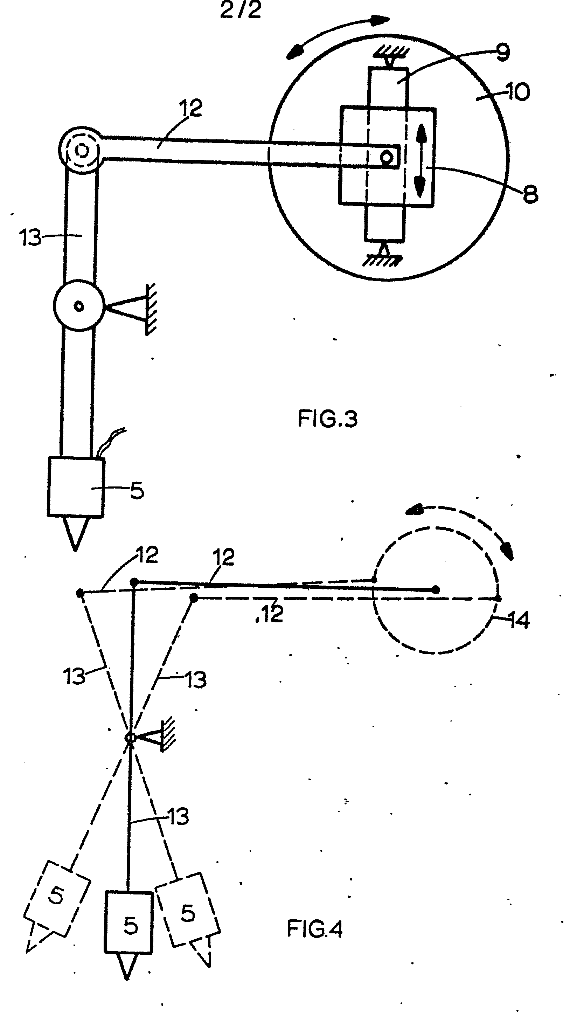

Mit dem Messen des Abstands a zwischen zwei nebeneinanderliegenden Latten wird auch der Ausschlagswinkel $\alpha$ des Spritzkopfs 5 eingestellt. Wie die Figuren 3 und 4 zeigen, geschieht dies dadurch, dass der hydraulische Zylinder 8 in bezug auf die feste Kolbenstange 9 mehr oder weniger verschoben wird. Die Kolbenstange 9 ist an einer drehenden Scheiben 10 angebracht. Das Drehen der Scheibe 10 in Verbindung mit dem Mass des Verschiebens des Zylinders 8 bestimmen die Exzentrizität der Hebel 12 und 13 in bezug auf den Mittelpunkt der Scheibe 10 und so die Grösse des Ausschlagswinkel $\alpha$ des Spritzkopfes 5. In der Figur 4 sind meherer Positionen des Spritzkopfs 5 schematisch dargestellt. Mit dem punktierten Kreis 14 ist die maximale Verschiebung des Zylinders 8 über die Kolbenstange 9 bei drehender Scheibe 10 angegeben.

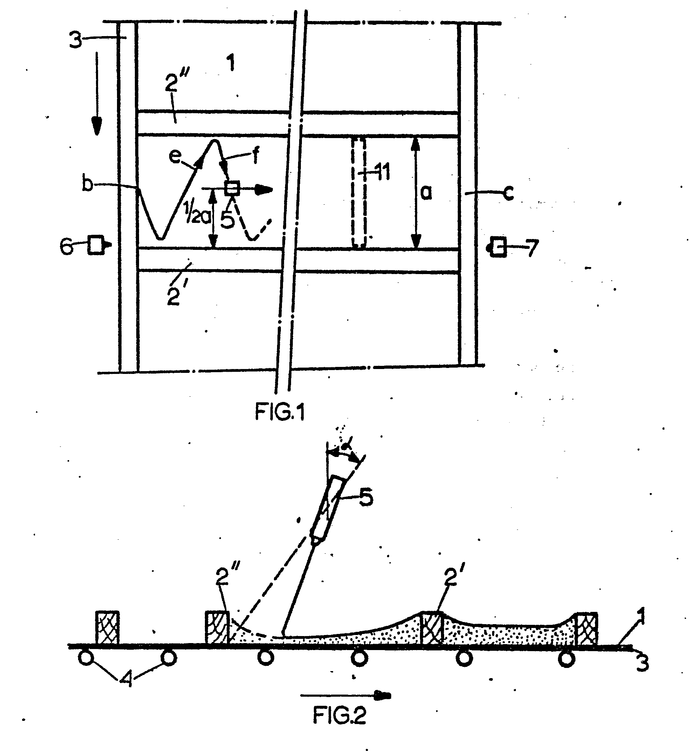

Hat man all diese Handlungen vorgenommen, so kann man mit dem Auftragen von schaumbildendem Material zwischen die Latten 2' und 2" (siehe Figur 1) beginnen. Der Spritzkopf 5 bewegt sich dabei vom Punkt b aus zum Punkt c über das Paneel und macht, wie bereits erwähnt, eine Pendelbewegung, die eine periodische Kippbewegung um eine Achse parallel zu den Latten am Paneel ist. Der Spritzkopf 5, d.h. die Richtung des hinausströmenden schaumbildenden Materials, macht dabei einen periodisch variierenden Winkel in bezug auf die Normale auf dem Paneel. Wie schon erwähnt, wird der maximale Winkel in bezug auf die Normale Ausschlagswinkel genannt. Wie die Figur 1 zeigt, ist die hin- und hergehende Bewegung des Spritzkopfs ein Sinusoid, was den Vorzug hat, dass die hingehende Bewegung e an den Stehrändern der Latten einigermassen

7                    0044108

verzögert in die zurückgehende Bewegung f umgekehrt wird. Die Folge davon ist, dass an den Stehrändern durch den Spritzkopf 5 verhältnismässig mehr schaumbildendes Material auf das Paneel aufgetragen wird. Dieses Mehrmaterial steigt an den Rändern an, wodurch sie ganz oder teilweise mit Schaum bedeckt werden. Durch Ändern der Sinusoidbewegung lässt sich das Mass des Ansteigens des Schaums an den Latten einstellen.

Dadurch, dass der Abstand zwischen den Latten viel geringer ist als die Breite des Paneels und die Streifen schaumbildendes Material jetzt senkrecht zu den Latten angebracht werden, erreicht man, dass beim Auftragen des einen Streifens neben den anderen der vorhergehende Streifen nicht oder kaum mit dem Verschäumungsverfahren begonnen hat. Das zu verschäumende Material fliesst jetzt ineinander über, wodurch eine egale Oberfläche von überall nahezu gleicher Schaumdicke erreicht wird. Mit diesem Verfahren bekommt man keine Spalten zwischen den Streifen sowie zwischen den Streifen und den Latten.

Wenn der Spritzkopf 5 den Punkt c am Paneel erreicht hat, wird das Spritzen eingestellt und der Spritzkopf wieder über der Verbindungslinie der Fotozelle 6 und der Lichtquelle 7 angeordnet, und zwar ganz an der Seite des Paneels. Alsdann wird das Paneel wieder fortbewegt, bis die nächstliegende Latte am Paneel durch die Fotozelle 6 mit Lichtquelle 7 wahrgenommen wird. Gleichzeitig wird der Spritzkopf mit der halben Paneelgeschwindigkeit fortbewegt. Auf diese Weise befindet sich der Spritzkopf wieder in der Mitte zwischen den Latten und kann der Zyklus aufs neue anfangen. Bei diesem Verfahren ist es nicht notwendig, dass die Latten am Paneel in konstant gleichem Abstand voneinander liegen.

Das Auftragen des zu verschäumenden Materials lässt sich einstellen, wenn ein Teil der Paneeloberfläche zwischen den Latten nicht mit Schaum bedeckt zu werden braucht, weil zum Beispiel in diesem Teil eine Fensteröffnung vorgesehen ist. Das Auftragen kann auch automatisch eingestellt werden, etwa dadurch, dass eine Fotozelle eine senkrecht zu den Latten 2' und 2" angeordnete Latte 11 (in der Figur 1 punktiert dargestellt) wahrnimmt.

Vergleichendes Beispiel

An einer 10 mm starken und 200 cm breiten Gipskartonplatte sind im Abstand von jeweils 40 cm 96 mm hohe Latten angeordnet, und zwar parallel zueinander und senkrecht zur Längsrichtung. Der Raum zwischen den Latten wird mit Polyurethanschaum gefüllt. Beim Auftragen des schaumbildenden Materials in Streifen parallel zu den Latten gemäss dem in der niederländischen Patentanmeldung 7707840 umschriebenen Verfahren bekommt man eine Schaumschicht, deren Dicke zwischen 30 und 70 mm variiert (95 % der Messungen). Die mittlere Dicke beträgt 35 mm. Dafür sind 50 % mehr Schaum nötig als aufgrund einer Dicke von 35 mm berechnet werden konnte. Vereinzelt weist die Schaumschicht Spalten zwischen den nebeneinanderliegenden Streifen sowei zwischen den Latten und dem anstossendem Streifen Schaummaterial. Auf der Isoliereffekt verringert sich dadurch. Ausserdem ragt die Schaumschicht vereinzelt über die Latten hinaus, was eine Nachbearbeitung der Schaumschicht erfordert, da die daran anzubringende Plattenabdeckung sonst nicht flach anschliessen wird.

Beispiel

An einer Gipskartonplatte mit denselben Abmessungen wie im vergleichenden Beispiel und mit in ähnlicher Weise angeordneten 96 mm hohen Holzlatten wird der Raum zwischen den Latten gemäss dem erfindungsgemässen Verfahren mit Polyurethanschaum gefüllt. Durch den Spritzkopf wird in Streifen schaumbildendes Material aufgetragen. Die transversale Geschwindigkeit, mit der sich der Spritzkopf über die Gipskartonplatte bewegt, ist in diesem Fall 30 m/Min., der maximale Ausschlagswinkel des Spritzkopfs beträgt 90 °C. Die Höhe über der Platte is 20 cm. Nach Aushärten der Schaumschicht schwankt deren Dicke in der Mitte zwischen den Latten zwischen 30 und 50 mm (95 % der Messungen). Die mittlere Dicke beträgt 35 mm. Dafür sind nur 20 % mehr Schaum nötig als aufgrund einer Dicke von 35 mm berechnet werden konnte. Der Schaum ist an den Latten angestiegen, ragt jedoch nicht über sie hinaus. Die Schaumschicht weist keine Spalten zwischen den Streifen und auch nicht zwischen den Holzlatten und dem anstossenden Schaummaterial auf.

# PATENTANSPRÜCHE

1. Verfahren zum Auftragen von Schaum auf ein flaches, nahezu waagerecht angeordnetes und mit in gewissen Abständen voneinander angebrachten parallelen Latten versehenes Paneel mit Hilfe eines in bezug auf das Paneel bewegenden Spritzkopfs, der den Schaum oder ein schaumbildendes Material zwischen den Latten anbringt, dadurch gekennzeichnet, dass der Spritzkopf parallel zu und in der Mitte zwischen jeweils zwei nebeneinanderliegenden Latten fortbewegt wird und dass während dieser Bewegung der Spritzkopf eine Hin- und Herbewegung ausführt in einer Richtung senkrecht zu den Latten.

2. Verfahren nach Anspruch 1, dadurch gekennzeichnet, dass die hin- und hergehende Bewegung des Spritzkopfs eine Pendelbewegung in bezug auf die Normale auf dem Paneel ist.

3. Verfahren nach den Ansprüchen 1 und 2, dadurch gekennzeichnet, dass der Abstand zwischen den zwei nebeneinanderliegenden parallelen Latten gemessen wird, wobei:

   a. der Spritzkopf in halbem Abstand zwischen den Latten angebracht wird;

   b. der Spritzkopf parallel zu den Latten über das Paneel fortbewegt wird mit einer Geschwindigkeit oder einer Spritzmenge je Zeiteinheit, die unmittelbar durch den gemessenen Abstand zwischen den zwei Latten bestimmt wird.

4. Verfahren nach Anspruch 3, dadurch gekennzeichnet, dass der Spritzkopf in bezug auf das Paneel eine Pendelbewegung macht, wobei der Ausschlagswinkel $\alpha$ unmittelbar durch den gemessenen Abstand zwischen den zwei Latten bestimmt wird.

5. Verfahren nach den Ansprüchen 1 bis 4, dadurch gekennzeichnet, dass die hin- und hergehende Bewegung des Spritzkopfs ein Sinusoid ist.

6. Verfahren nach den Ansprüchen 1 bis 5, dadurch gekennzeichnet, dass das Paneel während des Anbringens des Schaums nicht fortbewegt wird.

7. Verfahren nach den Ansprüchen 1 bis 6, dadurch gekennzeichnet, dass das Paneel mit Latten in einer Richtung senkrecht zu den Latten fortbewegt wird und dass während dieser Bewegung der Abstand zwischen zwei Latten gemessen, die Bewegung des Paneels eingestellt und der Schaum angebracht wird, wonach das Paneel wieder fortbewegt wird und sich der Zyklus wiederholt, bis das ganze Paneel mit einer Schaumschicht versehen ist.

10 0044108

8. Verfahren nach den Ansprüchen 1 bis 7, dadurch gekennzeichnet, dass der Ausschlagswinkel $\alpha$ direkt proportional zum gemessenen Abstand zwischen zwei nebeneinanderliegenden Latten eingestellt wird.

9. Verfahren nach den Ansprüchen 1 bis 8, dadurch gekennzeichnet, dass eine Fotozelle und eine Lichtquelle zur Höhe der Latten beidseitig des Paneels aufgestellt sind, wobei die Verbindungslinie zwischen Fotozelle und Lichtquelle parallel zu den Latten verläuft.

10. Verfahren nach den Ansprüchen 1 bis 9, dadurch gekennzeichnet, dass die Einstellung des Spritzkopfs in der Mitte zwischen zwei Latten dadurch zustande gebracht wird, dass er mit einer Geschwindigkeit bewegt wird, die die Hälfte der Geschwindigkeit ist, mit der das Paneel in bezug auf die Fotozelle fortbewegt wird.

11. Paneel mit Latten, zwischen denen sich eine nach einem oder mehreren der vorgenannten Ansprüche aufgetragene Schaumschicht befindet.

12. Vorrichtung zum Durchführen des Verfahrens nach einem oder mehreren der vorgenannten Ansprüche, dadurch gekennzeichnet, dass die enthält:

a. Mittel zum Fortbewegen des Paneels,

b. Mittel zum Messen des Abstands zwischen zwei aufeinanderfolgenden Latten,

c. Mittel zum Fortbewegen des Spritzkopfs mitten zwischen zwei Latten und parallel zu diesen,

d. Mittel zum Vornehmen einer hin- und hergehenden Bewegung mit den Spritzkopf zwischen den Latten, senkrecht zu diesen.

FIG.1

FIG.2

0044108

FIG.3

FIG.4

0044108

Nummer der Anmeldung

**Europäisches Patentamt**

**EUROPÄISCHER RECHERCHENBERICHT**

EP 81 20 0754

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 617 510 (KORNYLAK)<br>* Insgesamt * | 1 |
| A | GB - A - 1 113 959 (I.C.I.)<br>* Insgesamt * | 1 |
| A | US - A - 2 145 861 (CASTO)<br>* Abbildung 1 * | 1 |
| A | DE - A - 2 830 399 (MOBAN)<br>* Insgesamt * | 1 |
| D | & NL - A - 77 07840 | |
| A | NL - A - 75 03382 (MOBAN)<br>* Insgesamt * | 1 |

**KLASSIFIKATION DER ANMELDUNG (Int. Cl.³)**

B 29 D 27/02
B 05 B 13/04

**RECHERCHIERTE SACHGEBIETE (Int. Cl.³)**

B 29 D 27/00
B 05 B 13/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 02-10-1981 | KUSARDY |

EPA form 1503.1 06.78